# EUROPÄISCHE PATENTSCHRIFT

(11) **EP 2 170 539 B1**
(45) Veröffentlichungstag und Bekanntmachung des Hinweises auf die Patenterteilung: **06.06.2012**
(21) Anmeldenummer: 08785908.8
(22) Anmeldetag: 03.07.2008
(51) Int. Cl.: F16K 31/06, F16B 17/00, B21D 41/04, B21D 39/04, B60T 8/36, B23P 11/00, F16B 4/00

(54) **VERFAHREN UND VORRICHTUNG ZUR HERSTELLUNG EINER HOCHDRUCKDICHTEN VERBINDUNG UND ZUGEHÖRIGE VENTILPATRONE FÜR EIN MAGNETVENTIL**
METHOD AND DEVICE FOR PRODUCING A HIGH-PRESSURE-TIGHT CONNECTION AND ASSOCIATED VALVE CARTRIDGE FOR A SOLENOID VALVE
PROCÉDÉ ET DISPOSITIF POUR CRÉER UNE LIAISON ÉTANCHE AUX HAUTES PRESSIONS ET CARTOUCHE DE VANNE ASSOCIÉE POUR ÉLECTROVANNE

(30) Priorität: 20.07.2007 DE 102007034032
(43) Veröffentlichungstag der Anmeldung: 07.04.2010
(73) Patentinhaber: Robert Bosch GmbH, 70442 Stuttgart (DE)
(72) Erfinder: MUELLER, Friedrich, 87509 Immenstadt (DE); SCHNALZGER, Guenther, 87544 Blaichach (DE); KIRSCHNER, Martin, 87544 Blaichach (DE)
(86) Internationale Anmeldenummer: PCT/EP2008/058573
(87) Internationale Veröffentlichungsnummer: WO 2009/013102

(56) Entgegenhaltungen:
- EP-A- 0 143 062
- EP-A- 1 647 460
- NL-C- 34 169
- US-A- 4 624 282

## Beschreibung

### Stand der Technik

Die Erfindung betrifft ein Verfahren und eine Vorrichtung zur Herstellung einer hochdruckdichten Verbindung zwischen einem Polkern und einer Ventilhülse eines Magnetventils und eine zugehörige Ventilpatrone für ein Magnetventil. Ein solches Verfahren und eine solche Ventilpatrone sind zum Beispiel in der US-A-4624282 offenbart. Ein solches Verfahren wird z:B. in der NL-C-34169 offenbart.

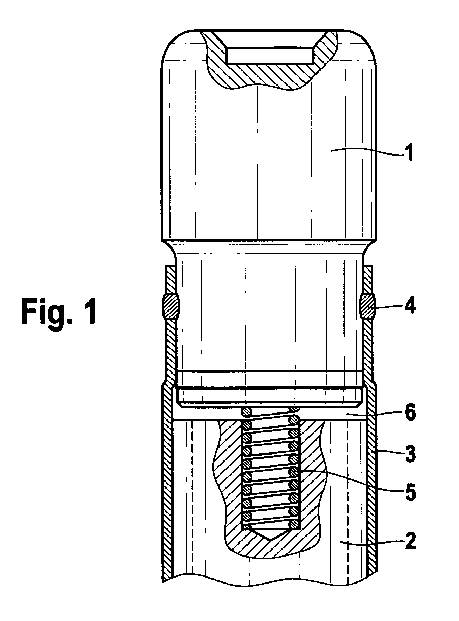

Eine Ventilpatrone für ein herkömmliches Magnetventil, insbesondere für ein Hydraulikaggregat, welches beispielsweise in einem Antiblockiersystem (ABS) oder einem Antriebsschlupfregelsystem (ASR-System) oder einem elektronischen Stabilitätsprogrammsystem (ESP-System) eingesetzt wird, ist in Figur 1 dargestellt. Wie aus Figur 1 ersichtlich ist, umfasst die Ventilpatrone für das herkömmliche Magnetventil einen Polkern 1, eine Ventilhülse 3 und einen Anker 2, der innerhalb der Ventilhülse 3 durch einen von einer nicht dargestellten Magnetbaugruppe eingeleiteten Magnetfluss axial gegen die Kraft einer Rückstellfeder 5 über einen Luftspalt 6 in Richtung Polkern 1 bewegbar ist. Bei der Herstellung der Ventilpatrone für das herkömmliche Magnetventil wird der Polkern 1 zuerst in die Ventilhülse 3 voreingepresst. Dann erfolgt auf einer weiteren Montagestation durch weiteres Einpressen des Polkerns 1 in die Ventilhülse 3 eine iterative Einstellung des Ankerhubs, bis der gewünschte Ankerhub erreicht ist. Anschließend wird der Polkern 1 auf einer weiteren Montagestation durch eine Dichtschweißnaht 4 fest mit der Ventilhülse 3 verbunden, wobei die Dichtschweißnaht 4 beispielsweise durch eine Laserschweißung hergestellt wird. Durch die Dichtschweißnaht 4 wird die Ventilpatrone hydraulisch gegenüber der Atmosphäre abgedichtet. Laserschweißungen sind jedoch in Bezug auf Einrichtung, Betreuung, Wartung und Überwachung fehleranfällig und kostenintensiv.

Im Dokument EP-A-1 647 480 wird ein Verfahren zur Herstellung einer hochdruckdichten Verbindung zwischen einem Polkern und einer Ventilhülse und ein Magnetventil mit einer Ventilpatrone beschrieben, die einen Polkern und eine Ventilhülse umfasst. Gemäß dem beschriebenen Verfahren wird zur Herstellung einer hochdruckdichten Verbindung der Polkern in die Ventilhülse gepresst und anschließend mit der Hülse verschweißt.

Im Dokument NL-C-34169 wird eine Vorrichtung und ein Verfahren zur Herstellung einer Verbindung zwischen einem Projektil und einer Patronenhülse beschrieben. Die beschriebene Vorrichtung umfasst ein zweiteiliges Presswerkzeug mit einem mittleren und einem äußeren Stempel, so dass zwischen einer Innenbohrung des äußeren Stempels und dem eingelegten Projektil bis zu einer im Projektil eingebrachten Konusrille ein Fügespalt entsteht, der im Zuge der Montage von der Patronenhülse bis zu einem Anschlag durchlaufen wird. Hierbei wird das Projektil so weit in das Presswerkzeug eingelegt, dass ein konischer Bereich der Innenbohrung des Stempels, der von einer Einführkante der Innenbohrung ausgeht, im Wesentlichen an der Konusrille des Projektils endet. Hierbei ist ein gleichbleibender Durchmesser der Innenbohrung des äußeren Stempels im Anschluss an den konischen Bereich so an einen maximalen Außendurchmesser des Projektils angepasst, dass eine obere Kante der Konusrille als Anschlag für die Patronenhülse wirkt, um eine maximale Einführtiefe des Projektils in die Patronenhülse vorzugeben. Die Patronenhülse wird an das Projektil angesetzt und in den Fügespalt eingeführt. Anschließend presst das Presswerkzeug das Projektil durch gleichzeitiges Niederdrücken des mittleren Stempels und des äußeren Stempel bis zum Anschlag der Patronenhülse an der oberen Kante der Konusrille in die Patronenhülse, um die Patronenhülse am oberen Ende des Fügespalts umzuformen und im Bereich der Konusrille an das Projektil anzufügen.

Im Dokument US-A-4624282 wird ein zweistufiges Magnetventil mit einer Ventilpatrone beschrieben, die einen Polkern und eine Ventilhülse umfasst. Eine hochdruckdichte Verbindung zwischen dem Polkern und der Ventilhülse wird durch ein radiales Vercrimpen der Ventilhülse in einer Nut des Polkerns hergestellt.

### Offenbarung der Erfindung

Das erfindungsgemäße Verfahren zur Herstellung einer hochdruckdichten Verbindung zwischen einem Polkern und einer Ventilhülse eines Magnetventils mit den Merkmalen des unabhängigen Patentanspruchs 1 hat demgegenüber den Vorteil, dass der Montageablauf einer Ventilpatrone durch den Entfall einer Laserschweißung vereinfacht und kostengünstiger ausgeführt werden kann. Durch das Einlegen des Polkerns in ein zweiteiliges Presswerkzeug, das einen mittleren Stempel und einen äußeren Stempel umfasst, so dass zwischen einer Innenbohrung des äußeren Stempels und dem eingelegten Polkern ein Fügespalt entsteht, einem Ansetzen des Polkerns an die Ventilhülse und Einführen der Ventilhülse in den Fügespalt und ein gleichzeitiges Niederdrücken des mittleren Stempels und des äußeren Stempels mit dem Polkern, so dass die Ventilhülse den Fügespalt durchläuft, kann das Voreinpressen und die Abdichtung nach außen in einem Arbeitsgang auf einer Montagestation ausgeführt werden. Die Ventilhülse wird bei Erreichen eines Pressdurchmessers des Polkerns aufgeweitet und im Fügespalt zwischen einer ersten Umformkante und einer zweiten Umformkante, zwischen denen sich der Durchmesser der Innenbohrung verjüngt, umgeformt und an den Polkern angefügt, so dass eine hochdruckdichte Verbindung zwischen dem Polkern und der Ventilhülse entsteht.

Die erfindungsgemäße Vorrichtung zur Herstellung einer hochdruckdichten Verbindung zwischen einem Polkern und einer Ventilhülse eines Magnetventils mit den Merkmalen des unabhängigen Patentanspruchs 4 weist ein zweiteiliges Presswerkzeug auf, das einen mittleren Stempel und einen äußeren Stempel umfasst. Das Presswerkzeug ist so ausgeführt, dass sich zwischen einer Innenbohrung des äußeren Stempels und dem in das Presswerkzeug eingelegten Polkern ein Fügespalt ausbildet, der im Zuge der Montage von der Ventilhülse durchlaufen wird. Die Innenbohrung des äußeren Stempels weist eine erste Umformkante und eine zweite Umformkante auf, zwischen denen sich der Durchmesser der Innenbohrung verjüngt. Das Presswerkzeug presst den Polkern durch gleichzeitiges Niederdrücken des mittleren Stempels und des äußeren Stempels in die Ventilhülse, um die Ventilhülse im Fügespalt zwischen der ersten Umformkante und der zweiten Umformkante umzuformen und an den Polkern anzufügen, so dass eine hochdruckdichte Verbindung zwischen dem Polkern und der Ventilhülse entsteht.

Die erfindungsgemäße Ventilpatrone mit den Merkmalen des unabhängigen Patentanspruchs 6 weist zwischen einem Polkern und einer Ventilhülse eines Magnetventils eine hochdruckdichte Verbindung auf, die durch Einpressen des Polkerns in die Ventilhülse und anschließendes Anfügen der Ventilhülse an den Polkern hergestellt wird.

Die erfindungsgemäße hochdruckdichte Verbindung zwischen dem Polkern und der Ventilhülse wird ohne eine kostenaufwändige Laserschweißung auf einer Montagestation hergestellt. Durch die erfindungsgemäße Verbindung wird der Polkern gegenüber dem Innendruck, der während des bestimmungsgemäßen Betriebs in das Magnetventil eingeleitet wird, in seiner Position gehalten. Zudem übernimmt die erfindungsgemäße Verbindung die Abdichtfunktion gegenüber der Atmosphäre.

Durch die in den abhängigen Ansprüchen aufgeführten Maßnahmen und Weiterbildungen sind vorteilhafte Verbesserungen des im unabhängigen Patentanspruch 1 angegebenen Verfahrens und der im unabhängigen Patentanspruch 4 angegebenen Vorrichtung möglich.

Besonders vorteilhaft ist, dass der äußere Stempel vom mittleren Stempel getrennt wird, wenn die Ventilhülse die zweite Umformkante erreicht, wobei der mittlere Stempel nach Trennung vom äußeren Stempel kraftlos geschaltet wird, und der äußere Stempel weiter in die bisherige Arbeitsrichtung bewegt wird, um die Ventilhülse weiter an den Polkern anzufügen. Durch den kraftlosen mittlern Stempel bleibt die Position des Polkerns im Wesentlichen unverändert, während die Ventilhülse weiter an die äußere Form des Polkerns angeformt wird.

In Ausgestaltung des erfindungsgemäßen Verfahrens wird der Polkern durch eine weitere Krafteinwirkung über den äußeren Stempel tiefer in die Ventilhülse gepresst, um durch den weitergehenden Umformvorgang der Ventilhülse eine gewünschte Hubeinstellung für die Bewegung eines Ankers vorzunehmen. Dadurch kann mit dem erfindungsgemäßen Verfahren auch noch der Hubeinstellvorgang auf der gleichen Montagestation ausgeführt werden, wodurch der Montageprozess in vorteilhafter Weise weiter vereinfacht wird.

In Ausgestaltung der erfindungsgemäßen Vorrichtung weist der Polkern einen Pressdurchmesser auf, der die Ventilhülse vor dem Erreichen der ersten Umformkante aufweitet. Die Ventilhülse weist eine Einführschräge auf, die das Einführen der Ventilhülse in den Fügespalt erleichtert. Zudem ist das Presswerkzeug so ausgeführt ist, dass der äußere Stempel während des Verbindungsvorgangs vom mittleren Stempel getrennt werden kann. Dadurch wird in vorteilhafter Weise ermöglicht, dass mit der erfindungsgemäßen Vorrichtung auch die Hubeinstellung des in der Ventilhülse beweglich geführten Ankers vorgenommen werden kann.

Vorteilhafte, nachfolgend beschriebene Ausführungsformen der Erfindung sowie die zu deren besserem Verständnis oben erläuterten, herkömmlichen Ausführungsbeispiele sind in den Zeichnungen dargestellt. In den Zeichnungen bezeichnen gleiche Bezugszeichen Komponenten bzw. Elemente, die gleiche bzw. analoge Funktionen ausführen.

Kurze Beschreibung der Zeichnungen
- Fig. 1: zeigt eine schematische Schnittdarstellung einer herkömmlichen Ventilpatrone.
- Fig. 2 bis Fig. 9: zeigen verschiedene Zustände während des erfindungsgemäßen Verfahrens zur Herstellung einer hochdruckdichten Verbindung zwischen einem Polkern und einer Ventilhülse eines Magnetventils.

### Ausführungsformen der Erfindung

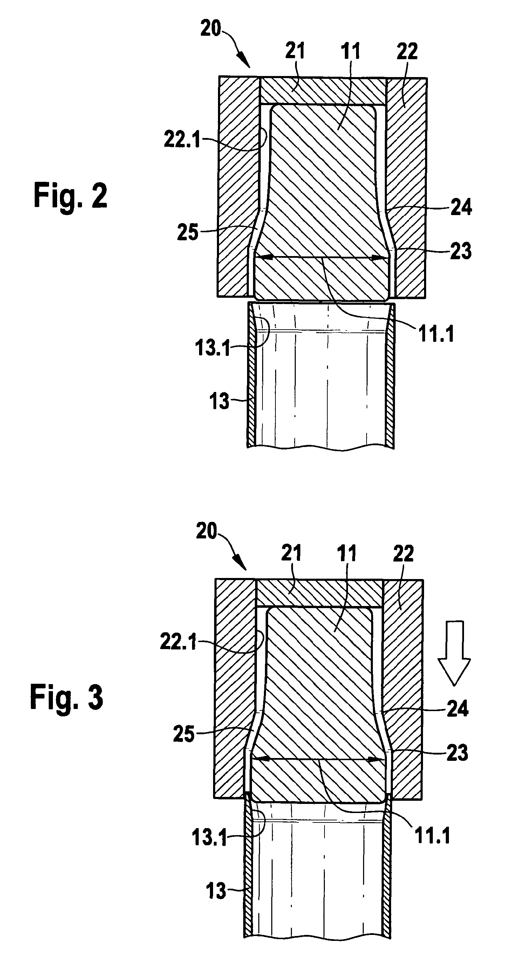

Wie aus Fig. 2 bis 9 ersichtlich ist, weist eine Vorrichtung zur Herstellung einer hochdruckdichten Verbindung zwischen einem Polkern 11 und einer Ventilhülse 13 eines Magnetventils als erfindungswesentliche Komponente ein zweiteiliges Presswerkzeug 20 auf, das einen mittleren Stempel 21 und einen äußeren Stempel 22 umfasst, wobei das Presswerkzeug 20 so ausgeführt ist, dass sich zwischen einer Innenbohrung 22.1 des äußeren Stempels 22 und dem in das Presswerkzeug 20 eingelegten Polkern 11 ein Fügespalt 25 ausbildet, der im Zuge der Montage von der Ventilhülse 13 durchlaufen wird. Wie weiter aus Fig. 2 bis 9 weiter ersichtlich ist, weist die Innenbohrung 22.1 des äußeren Stempels 22 eine erste Umformkante 23 und eine zweite Umformkante 24 auf, zwischen denen sich der Durchmesser der Innenbohrung 22.1 verjüngt. Zudem weist der Polkern 11 einen Pressdurchmesser 11.1 auf durch den die Ventilhülse 13 während des Montagevorgangs aufgeweitet wird.

Fig. 2 zeigt das Presswerkzeug 20 nach einem ersten Verfahrensschritt in dem der Polkern 11 in das zweiteilige Presswerkzeug 20 eingelegt wird. Der Polkern 11 ist so in das Presswerkzeug 20 eingelegt, dass zwischen der Innenbohrung 22.1 des äußeren Stempels 22 und dem eingelegten Polkern 11 der Fügespalt 25 entsteht. Zudem ist in Fig. 2 der Polkern 11 an die Ventilhülse 13 angelegt, wobei die Ventilhülse 13 eine Einführschräge 13.1 aufweist, über welche die Ventilhülse 13 einfacher in den Fügespalt 25 eingeführt werden kann..

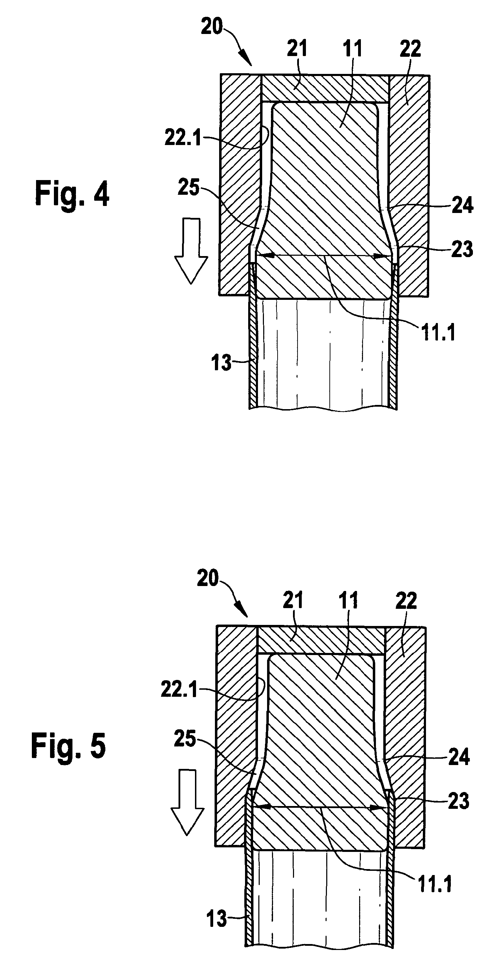

Fig. 3 und 4 zeigt das Presswerkzeug 20 nach dem Einführen der Ventilhülse 13 in den Fügespalt 25, wobei die Ventilhülse 13 durch ein gleichzeitiges Niederdrücken des mittleren Stempels 21 und des äußeren Stempels 22 mit dem Polkern 11 in Pfeilrichtung in den Fügespalt 25 eingeführt wird und diesen durchläuft.

Fig. 5 zeigt das Presswerkzeug 20 nach dem Erreichen des Pressdurchmessers 11.1 des Polkerns 11, wobei die Ventilhülse 13 den Pressdurchmesser 11.1 durch eine Aufweitung überwindet. Nach Erreichen der ersten Umformkante 23 beginnt der eigentliche Umformprozess der Ventilhülse 13.

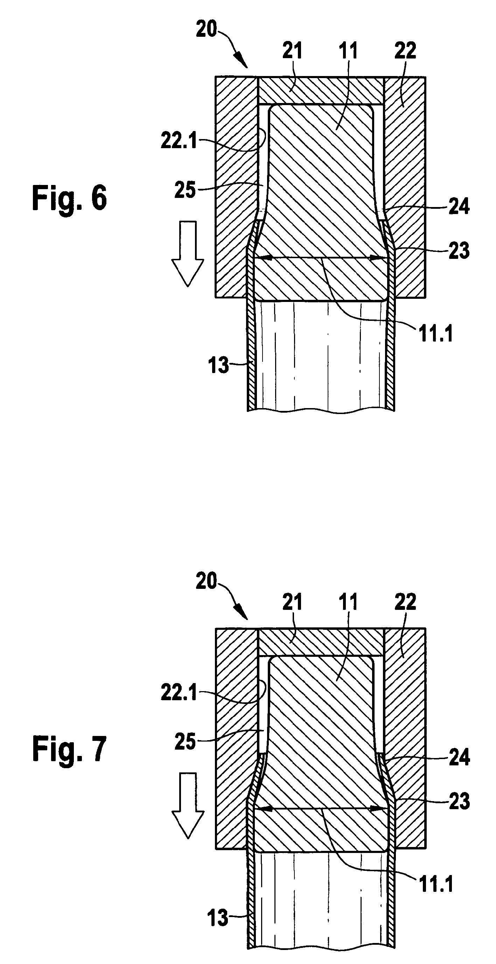

Wie aus Fig. 6 und 7 ersichtlich ist, wird die Ventilhülse 13 im Fügespalt 25 zwischen der ersten Umformkante 23 und der zweiten Umformkante 24 umgeformt und an den Polkern 11 angefügt.

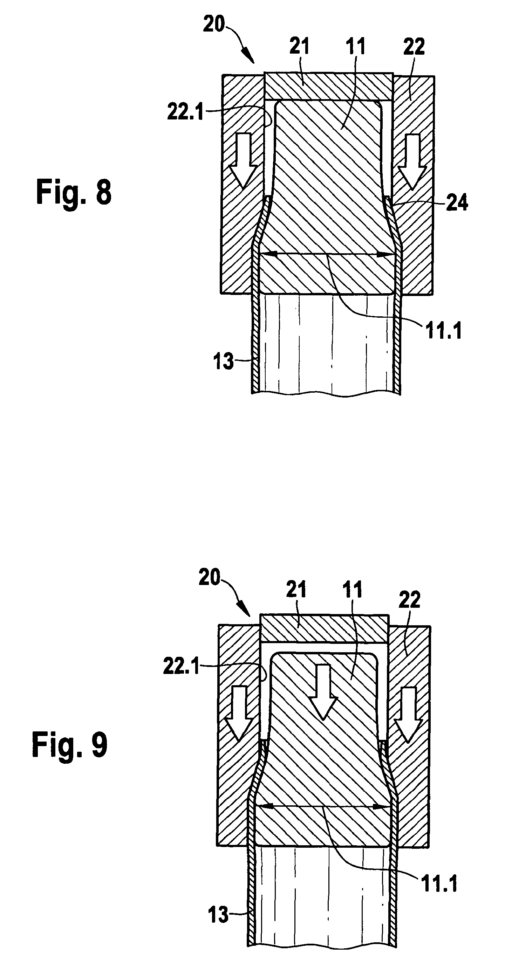

Wie aus Fig. 8 ersichtlich ist, wird der äußere Stempel 22 vom mittleren Stempel 21 getrennt, wenn die Ventilhülse 13 die zweite Umformkante 24 erreicht. Der mittlere Stempel 21 wird nach Trennung vom äußeren Stempel 22 kraftlos geschaltet und der äußere Stempel 22 übernimmt dadurch die weitere Arbeit des Anfügens der Ventilhülse 13 an den Polkern 11, dass er weiter in die bisherige durch Pfeile angezeigte Arbeitsrichtung bewegt wird, um die Ventilhülse 13 weiter an den Polkern 11 anzufügen. Die Position des Polkerns 11 bleibt während des Vorgangs im Wesentlichen unverändert.

Zur Einstellung eines gewünschten Ankerhubs kann der Polkern 11, wie aus Fig. 9 ersichtlich ist, durch eine weitere Krafteinleitung des äußeren Stempels 22, der in Pfeilrichtung bewegt wird, tiefer in Pfeilrichtung in die Ventilhülse 13 gepresst werden. Hierbei wirkt die vom äußeren Stempel 22 eingeleitete Kraft über die Ventilhülse 13 auf den Polkern 11, der über einen gleichzeitigen, weiteren Umformvorgang der Ventilhülse 13 weiter in die Ventilhülse 13 gepresst wird, so dass dadurch die Einstellung des Ankerhubs erfolgen kann.

Durch das erfindungsgemäße Verfahren und die erfindungsgemäße Vorrichtung kann ohne kostenaufwändiges Laserschweißen eine Ventilpatrone für ein Magnetventil hergestellt,werden, deren Polkern und Ventilhülse hochdruckdicht miteinander verbunden sind. Zudem ermöglicht die Erfindung in vorteilhafter Weise das Einpressen des Polkerns, die Einstellung des Ankerhubs und die Abdichtung nach außen in einem Arbeitsgang auf einer Montagestation. Die Erfindung übernimmt somit den Hubeinstellprozess, die Haltefunktion des Polkern gegenüber dem betriebsbedingten Innendruck und die Abdicht- und Haltefunktion, die in einem herkömmlichen Magnetventil durch eine Laserschweißnaht zwischen dem Polkern und der Ventilhülse ausgeführt wurde.

## Patentansprüche

1. Verfahren zur Herstellung einer hochdruckdichten Verbindung zwischen einem Polkern (11) und einer Ventilhülse (13) eines Magnetventils, **gekennzeichnet durch** die Schritte:
- Einlegen des Polkerns (11) in ein zweiteiliges Presswerkzeug (20), das einen mittleren Stempel (21) und einen äußeren Stempel (22) umfasst, so dass zwischen einer Innenbohrung (22.1) des äußeren Stempels (22) und dem eingelegten Polkern (11) ein Fügespalt (25) entsteht,
- Ansetzen des Polkerns (11) an die Ventilhülse (13) und Einführen der Ventilhülse (13) in den Fügespalt (25),
- gleichzeitiges Niederdrücken des mittleren Stempels (21) und des äußeren Stempels (22) mit dem Polkern (11), so dass die Ventilhülse (13) den Fügespalt (25) durchläuft,
- wobei die Ventilhülse (13) bei Erreichen eines Pressdurchmessers (11.1) des Polkerns (11) aufgeweitet und im Fügespalt (25) zwischen einer ersten Umformkante (23) und einer zweiten Umformkante (24) umgeformt und an den Polkern (11) angefügt wird, wobei sich der Durchmesser der Innenbohrung (22.1) zwischen der ersten Umformkante (23) und der zweiten Umformkante (24) verjüngt.

2. Verfahren nach Anspruch 1, **dadurch gekennzeichnet, dass** der äußere Stempel (22) vom mittleren Stempel (21) getrennt wird, wenn die Ventilhülse (13) die zweite Umformkante erreicht, wobei der mittlere Stempel (21) nach der Trennung vom äußeren Stempel (22) kraftlos geschaltet wird und der äußere Stempel (22) weiter in die bisherigen Arbeitsrichtung bewegt wird, um die Ventilhülse (13) weiter an den Polkern (11) anzufügen.

3. Verfahren nach Anspruch 2, **dadurch gekennzeichnet, dass** der Polkern (11) durch weitere Krafteinwirkung über den äußeren Stempel (22) tiefer in die Ventilhülse (13) gepresst wird, um durch den weitergehenden Umformvorgang der Ventilhülse (13) eine gewünschte Hubeinstellung für einen axialbeweglichen Anker vorzunehmen.

4. Vorrichtung zur Herstellung einer hochdruckdichten Verbindung zwischen einem Polkern (11) und einer Ventilhülse (13) eines Magnetventils, insbesondere zur Durchführung des Verfahrens nach einem der Ansprüche 1 bis 3, mit einem zweiteiligen Presswerkzeug (20), das einen mittleren Stempel (21) und einen äußeren Stempel (22) umfasst, **dadurch gekennzeichnet, dass** das Presswerkzeug (20) so ausgeführt ist, dass sich zwischen einer Innenbohrung (22.1) des äußeren Stempels (22) und dem in das Presswerkzeug (20) eingelegten Polkern (11) ein Fügespalt (25) ausbildet, der im Zuge der Montage von der Ventilhülse (13) durchlaufen wird, wobei die Innenbohrung (22.1) des äußeren Stempels (22) eine erste Umformkante (23) und eine zweite Umformkante (24) aufweist, zwischen denen sich der Durchmesser der Innenbohrung (22.1) verjüngt, wobei das Presswerkzeug (20) den Polkern (11) durch gleichzeitiges Niederdrücken des mittleren Stempels (21) und des äußeren Stempels (22) in die Ventilhülse (13) presst, um die Ventilhülse (13) im Fügespalt (25) zwischen der ersten Umformkante (23) und der zweiten Umformkante (24) umzuformen und an den Polkern (11) anzufügen.

5. Vorrichtung nach Anspruch 4, **dadurch gekennzeichnet, dass** das Presswerkzeug (20) so ausgeführt ist, dass der äußeren Stempel (22) während des Verbindungsvorgangs vom mittleren Stempel (21) trennbar ist.

6. Ventilpatrone für ein Magnetventil mit einem Polkern (11) und einer Ventilhülse (13), wobei der Polkern (11) und die Ventilhülse (13) hochdruckdicht miteinander verbunden sind, **dadurch gekennzeichnet, dass** zur Herstellung der hochdruckdichten Verbindung der Polkern (11) bis über einen Pressdurchmesser (11.1) des Polkerns (11) hinaus in die Ventilhülse (13) eingepresst ist und die Ventilhülse (13) in Einpressrichtung des Polkerns (11) hinter dem Pressdurchmesser (11.1) an den Polkern (13) angefügt ist und wobei der Polkern (13) ein aus der Ventilhülse (13) vorstehendes Ende mit einem gegenüber dem Pressdurchmesser (11.1) kleineren Durchmesser aufweist.

7. Ventilpatrone nach Anspruch 6, **dadurch gekennzeichnet, dass** der Polkern (11) einen Pressdurchmesser (11.1) aufweist, der die Ventilhülse (13) aufweitet.

8. Ventilpatrone nach Anspruch 6 oder 7, **dadurch gekennzeichnet, dass** die Ventilhülse (13) eine Einführschräge (13.1) aufweist.

## Claims

1. Method for producing a high-pressure-tight connection between a pole core (11) and a valve sleeve (13) of a solenoid valve, **characterized by** the steps of:
- inserting the pole core (11) into a two-part compression mould (20) which comprises a central die (21) and an external die (22), so that a joining gap (25) is produced between an inner bore (22.1) of the external die (22) and the inserted pole core (11),
- attaching the pole core (11) to the valve sleeve (13) and inserting the valve sleeve (13) into the joining gap (25),
- simultaneously depressing the central die (21) and the external die (22) together with the pole core (11), so that the valve sleeve (13) passes through the joining gap (25),
- with the valve sleeve (13) expanding when a pressing diameter (11.1) of the pole core (11) is reached and being shaped in the joining gap (25) between a first shaping edge (23) and a second shaping edge (24) and being joined to the pole core (11), with the diameter of the inner bore (22.1) tapering between the first shaping edge (23) and the second shaping edge (24).

2. Method according to Claim 1, **characterized in that** the external die (22) is separated from the central die (21) when the valve sleeve (13) reaches the second shaping edge, with the central die (21) being rendered powerless after it is separated from the external die (22), and the external die (22) being moved further in the previous operating direction in order to further join the valve sleeve (13) to the pole core (11).

3. Method according to Claim 2, **characterized in that** the pole core (11) is pressed deeper into the valve sleeve (13) by a further action of force by means of the external die (22), in order to perform a desired travel adjustment for an axially moving armature by virtue of the continuing shaping process of the valve sleeve (13).

4. Apparatus for producing a high-pressure-tight connection between a pole core (11) and a valve sleeve (13) of a solenoid valve, in particular for carrying out the method according to one of Claims 1 to 3, having a two-part compression mould (20) which comprises a central die (21) and an external die (22), **characterized in that** the compression mould (20) is designed such that a joining gap (25) is formed between an inner bore (22.1) in the external die (22) and the pole core (11) which is inserted into the compression mould (20) and through which the valve sleeve (13) passes during the course of assembly, with the inner bore (22.1) in the external die (22) having a first shaping edge (23) and a second shaping edge (24), the diameter of the inner bore (22.1) tapering between the said shaping edges, with the compression mould (20) pressing the pole core (11) into the valve sleeve (13) by simultaneously depressing the central die (21) and the external die (22), in order to shape the valve sleeve (13) in the joining gap (25) between the first shaping edge (23) and the second shaping edge (24) and to join the said valve sleeve to the pole core (11).

5. Apparatus according to Claim 4, **characterized in that** the compression mould (20) is designed such that the external die (22) can be separated from the central die (21) during the connecting process.

6. Valve cartridge for a solenoid valve having a pole core (11) and a valve sleeve (13), with the pole core (11) and the valve sleeve (13) being connected to one another in a high-pressure-tight manner, **characterized in that**, in order to produce the high-pressure-tight connection, the pole core (11) is pressed into the valve sleeve (13) to a point beyond a pressing diameter (11.1) of the pole core (11) and the valve sleeve (13) is joined to the pole core (11) behind the pressing diameter (11.1) in the pressing direction of the pole core (11), and with the pole core (11) having an end which projects out of the valve sleeve (13) and has a diameter which is smaller than the pressing diameter (11.1).

7. Valve cartridge according to Claim 6, **characterized in that** the pole core (11) has a pressing diameter (11.1) which expands the valve sleeve (13).

8. Valve cartridge according to Claim 6 or 7, **characterized in that** the valve sleeve (13) has an insertion slope (13.1).

## Revendications

1. Procédé pour créer une liaison étanche aux hautes pressions entre un noyau polaire (11) et un manchon de soupape (13) d'une électrovanne, **caractérisé par** les étapes suivantes :
- insérer le noyau polaire (11) dans un outil de pressage (20) en deux parties, qui comprend un poinçon central (21) et un poinçon extérieur (22), de sorte qu'entre un alésage interne (22.1) du poinçon extérieur (22) et le noyau polaire (11) inséré se crée un espace de joint (25),
- appliquer le noyau polaire (11) contre le manchon de soupape (13) et introduire le manchon de soupape (13) dans l'espace de joint (25),
- enfoncer simultanément le poinçon central (21) et le poinçon extérieur (22) avec le noyau polaire (11), de sorte que le manchon de soupape (13) traverse l'espace de joint (25),
- le manchon de soupape (13) s'élargissant lorsque le noyau polaire (11) atteint un diamètre de pressage (11.1) et étant déformé dans l'espace de joint (25) entre une première arête de déformation (23) et une deuxième arête de déformation (24) et étant assemblé au noyau polaire (11), le diamètre de l'alésage interne (22.1) se rétrécissant entre la première arête de déformation (23) et la deuxième arête de déformation (24).

2. Procédé selon la revendication 1, **caractérisé en ce que** le poinçon extérieur (22) est séparé du poinçon central (21), lorsque le manchon de soupape (13) atteint la deuxième arête de déformation, le poinçon central (21) étant commuté sans force après la séparation du poinçon extérieur (22), et le poinçon extérieur (22) étant déplacé davantage dans la direction de travail préalable afin d'assembler le manchon de soupape (13) davantage au noyau polaire (11).

3. Procédé selon la revendication 2, **caractérisé en ce que** le noyau polaire (11) est pressé par une application de force supplémentaire plus profondément dans le manchon de soupape (13) par le biais du poinçon extérieur (22), afin d'effectuer un ajustement de course souhaité pour un induit déplaçable axialement, par l'opération de déformation supplémentaire du manchon de soupape (13).

4. Dispositif pour créer une liaison étanche aux hautes pressions entre un noyau polaire (11) et un manchon de soupape (13) d'une électrovanne, en particulier pour mettre en oeuvre le procédé selon l'une quelconque des revendications 1 à 3, comprenant un outil de pressage (20) en deux parties qui comprend un poinçon central (21) et un poinçon extérieur (22), **caractérisé en ce que** l'outil de pressage (20) est réalisé de telle sorte qu'entre un alésage interne (22.1) du poinçon extérieur (22) et le noyau polaire (11) inséré dans l'outil de pressage (20) se crée un espace de joint (25), à travers lequel passe le manchon de soupape (13) au cours du montage, l'alésage interne (22.1) du poinçon extérieur (22) présentant une première arête de déformation (23) et une deuxième arête de déformation (24), entre lesquelles le diamètre de l'alésage interne (22.1) se rétrécit, l'outil de pressage (20) pressant le noyau polaire (11) par enfoncement simultané du poinçon central (21) et du poinçon extérieur (22) dans le manchon de soupape (13), afin de déformer le manchon de soupape (13) dans l'espace de joint (25) entre la première arête de déformation (23) et la deuxième arête de déformation (24) et de l'assembler au noyau polaire (11).

5. Dispositif selon la revendication 4, **caractérisé en ce que** l'outil de pressage (20) est réalisé de telle sorte que le poinçon extérieur (22) puisse être séparé du poinçon central (21) pendant l'opération d'assemblage.

6. Cartouche de soupape pour une électrovanne comprenant un noyau polaire (11) et un manchon de soupape (13), le noyau polaire (11) et le manchon de soupape (13) étant connectés l'un à l'autre de manière étanche aux hautes pressions, **caractérisée en ce que**, pour créer l'assemblage étanche aux hautes pressions, le noyau polaire (11) est pressé jusqu'au-delà d'un diamètre de pressage (11.1) du noyau polaire (11) dans le manchon de soupape (13) et le manchon de soupape (13) est assemblé dans la direction de pressage du noyau polaire (11) derrière le diamètre de pressage (11.1) au noyau polaire (11) et le noyau polaire (11) présentant une extrémité saillant hors du manchon de soupape (13) avec un diamètre plus petit que le diamètre de pressage (11.1).

7. Cartouche de soupape selon la revendication 6, **caractérisée en ce que** le noyau polaire (11) présente un diamètre de pressage (11.1) qui élargit le manchon de soupape (13).

8. Cartouche de soupape selon la revendication 6 ou 7, **caractérisée en ce que** le manchon de soupape (13) présente un biseau d'introduction (13.1).
